# EUROPEAN PATENT APPLICATION

(11) **EP 4 572 318 A1**
(43) Date of publication of application: **18.06.2025**
(21) Application number: 23853033.1
(22) Date of filing: 10.08.2023
(51) Int. Cl.: H04N 23/68, H04N 23/57, G03B 5/00, G03B 17/12, G03B 30/00

(54) **CAMERA ACTUATOR**

(30) Priority: 11.08.2022 KR 20220100329; 08.08.2023 KR 20230103494; 08.08.2023 KR 20230103495
(71) Applicant: LG INNOTEK CO. LTD, Gangseo-gu Seoul 07796 (KR)
(72) Inventor: LEE, Jun Taek, Seoul 07796 (KR)
(74) Representative: M. Zardi & Co S.A.
(86) International application number: PCT/KR2023/011846
(87) International publication number: WO 2024/035166

(57) **Abstract**

The present invention provides a camera actuator comprising: a housing; a first lens assembly and a second lens assembly disposed in the housing and configured to move in a first direction parallel to an optical axis direction; a first driving part disposed at the first side of the housing and configured to drive the first lens assembly; and a second driving part disposed at the second side of the housing and configured to drive the second lens assembly, wherein: the first driving part includes a first magnet disposed at the first lens assembly and a first coil facing the first magnet; the second driving part includes a second magnet disposed at the second lens assembly and a second coil facing the second magnet; and the length of the first coil in the first direction is greater than the length of the first magnet in the first direction and is smaller than the length of the second coil in the first direction.

## Description

### [Technical Field]

The present invention relates to a camera actuator.

### [Background Art]

A camera is a device which captures images or videos of a subject and is mounted on any of portable devices, drones, vehicles, and the like.

In order to improve quality of an image, a camera device or camera module has an image stabilization (IS) function for correcting or preventing shake due to movement of a user, an auto focusing (AF) function for adjusting a focal distance of a lens by automatically adjusting a distance between an image sensor and a lens, and a zooming function for increasing or decreasing a magnification for a long distant subject and capturing an image of the subject using a zoom lens.

When the camera performs various functions described above, each lens assembly accommodated in a camera actuator is moved in an optical axis direction by an interaction between a coil and a magnet, and there may be a difference between movable distances of lens assemblies according to functions performed by the lens assemblies.

In addition, a plurality of lens groups sequentially disposed in the optical axis direction may include a moving lens group which is movable and a fixed lens group which is fixed, and while the moving lens group performs the zooming or AF function or the like to move in the optical axis direction, when the moving lens group collides with the fixed lens group, the fixed lens group and the moving lens group may be damaged.

Accordingly, a technology for preventing damage to lens groups due to collision between a fixed lens group and a moving lens group and implementing a small camera actuator according to a difference between moving distances is required.

### [Detailed Description of Invention]

### [Technical Problem]

The present invention is directed to solving the above-described conventional problems and preventing waste of space, overheating, and damage due to collision between lens groups.

Objects to be solved by the present invention are not limited thereto, and other objects which are not mentioned above may be clearly understood by those skilled in the art from the following description.

### [Technical Solution]

One aspect of the present invention to achieve the above-described objects provides a camera actuator including a housing, a first lens assembly and a second lens assembly which are disposed inside the housing and move in a first direction parallel to an optical axis direction, a first driver which is disposed at a first side of the housing and drives the first lens assembly, and a second driver which is disposed at a second side of the housing and drives the second lens assembly, wherein the first driver includes a first magnet disposed on the first lens assembly and a first coil facing the first magnet, the second driver includes a second magnet disposed on the second lens assembly and a second coil facing the second magnet, a length of the first coil in the first direction is greater than a length of the first magnet in the first direction and smaller than a length of the second coil in the first direction.

In this case, the camera actuator may include a controller disposed apart from the first coil in the first direction, wherein the controller may overlap the first coil in the first direction and overlap the second coil in a second direction from the first side toward the second side.

In addition, the second magnet may be longer than the first magnet in the first direction, and a center of the first coil and a center of the second coil may be disposed to be misaligned.

In addition, the first coil and the second coil may be disposed to be longer than the second magnet in the first direction.

Meanwhile, the first lens assembly may include a first lens group and a first extension which surrounds the first lens group and extends toward the first driver, and the second lens assembly may include a second lens group and a second extension which surrounds the second lens group and extends toward the second driver.

In addition, the first extension may include a first recessed space recessed in the second side, the first magnet may be disposed in the first recessed space, the second extension may include a second recessed space recessed in the first side, and the second magnet may be disposed in the second recessed space.

In this case, the first driver may further include a first rail disposed between the first extension and the first coil and first ball units disposed between the first rail and the first extension, the second driver may further include a second rail disposed between the second extension and the second coil and second ball units disposed between the second rail and the second extension, and the number of the second ball units may be greater than the number of the first ball units.

Meanwhile, the second lens assembly may be disposed to be longer than the first lens assembly in the first direction and may have a driving distance which is longer than that of the first lens assembly in the first direction.

In addition, the first coil may include a first coil unit and a second coil unit which are disposed apart from each other in the first direction, and the second coil may include a third coil unit and a fourth coil unit which are disposed apart from each other in the first direction.

In addition, a first central point of a spaced region between the first coil unit and the second coil unit and a second central point of a spaced region between the third coil unit and the fourth coil unit may be disposed to be misaligned in the first direction.

In this case, each of the first coil unit and the second coil unit may be formed shorter than each of the third coil unit and the fourth coil unit in the first direction.

Meanwhile, the housing may include a first substrate, a second substrate, and a third substrate, the first coil and the controller may be disposed on the first substrate, the second coil may be disposed on the second substrate, and the first substrate and the second substrate may be connected through the third substrate.

In addition, the housing may include a first stopper facing the first lens assembly in the first direction and a second stopper facing the second lens assembly in the second direction, and the first stopper may be disposed above the second stopper in the first direction.

Meanwhile, another aspect of the present invention provides a camera actuator including a housing, a first lens assembly and a second lens assembly which are disposed in the housing and move in a first direction of an optical axis direction, a first substrate disposed at a first side of the housing, a second substrate which is disposed at a second side of the housing and faces the first substrate in a second direction perpendicular to the first direction, a first coil which is disposed on the first substrate and drives the first lens assembly, a second coil which is disposed on the second substrate and drives the second lens assembly, and a controller which is disposed on the first substrate and disposed apart from the first coil in the first direction, wherein the controller overlaps the second coil and the second substrate in the second direction.

In this case, the camera actuator may include a third substrate which electrically connects the first substrate and the second substrate, and the first coil may be electrically connected to the controller through the first substrate, and the second coil may be electrically connected to the controller through the second substrate and the third substrate.

In addition, a length of the first substrate in the first direction may be greater than the sum of a length of the first coil in the first direction and a length of the controller in the first direction.

In addition, the second coil may include a hollow therein, and the hollow may overlap the controller in the second direction.

Meanwhile, the first coil may include a first coil unit and a second coil unit which are spaced apart from each other in the first direction, and the first magnet may overlap at least one of the first coil unit and the second coil unit in the second direction.

In this case, the first magnet may not overlap the controller in the second direction.

Meanwhile, still another aspect of the present invention provides a camera actuator including a housing, a first lens assembly disposed on the housing, a second lens assembly and a third lens assembly which are sequentially disposed in the housing, a cover base which is disposed between the first lens assembly and the second lens assembly and accommodates the first lens assembly, a first driver which drives the second lens assembly in an optical axis direction, and a second driver which drives the third lens assembly in the optical axis direction.

In this case, the cover base may be disposed between the first lens assembly and the housing, and a first surface of the cover base facing the second lens assembly may be spaced apart from the housing.

In addition, the first surface may include a protrusion of which a portion protrudes toward the second lens assembly and an extension extending from the protrusion in a second direction perpendicular to a first direction parallel to the optical axis direction, and the protrusion and a bottom surface of the extension facing the second lens assembly may be disposed to have an inclination.

In addition, the cover base may include a second surface extending from the extension in a direction away from the second lens assembly to be spaced apart from the housing, an inclined portion obliquely extending from the extension, and a side surface portion extending from one end portion of the inclined portion to be parallel to the first direction.

Meanwhile, the cover base may include a recess into which the first lens assembly is inserted and a first wing extending in the second direction perpendicular to the first direction parallel to the optical axis direction.

In this case, the first lens assembly may include a second wing extending in the second direction, and a length of the second wing in the second direction is smaller than a length of the first wing in the second direction.

In addition, an inner surface of the recess may be disposed in contact with the first lens assembly, and a lower portion of the recess may be spaced apart from the first lens assembly in the optical axis direction.

Meanwhile, the cover base may include a third stopper facing the second lens assembly in the first direction parallel to the optical axis direction and a fourth stopper facing the third lens assembly in the first direction.

In this case, a lowermost end of the third stopper in the first direction may be disposed further adjacent to the first lens assembly than a lowermost end of the fourth stopper in the first direction.

### [Advantageous Effects]

A camera actuator according to embodiments of the present invention for solving above-described objects can generate a difference between lengths of a first coil and a second coil according to a difference between driving distances of moving lens assemblies.

In this case, since a controller is provided in a space formed due to the difference in length, heat generated by the controller can be effectively dissipated, and the camera actuator can be miniaturized.

In addition, there is an effect of preventing damage to a first lens group or a second lens group due to collision between the first lens group of a fixed first lens assembly and the second lens group of a second lens assembly.

Effects of the present invention are not limited to the above-described effects, and other effects which are not mentioned above will be clearly understood by those skilled in the art from the appended claims.

In addition, the effects of the present invention may be described in detail in the detailed description of the present invention and may not be necessarily limited to the above-described effects.

### [Description of Drawings]

The detailed description of exemplary embodiments of the present application which will be described below and the above-described summary may be more easily understood with reference to the accompanying drawings.

The exemplary embodiments are illustrated in the drawings for the purpose of illustrating the present invention.

However, it should be understood that the present application is not limited to illustrated precise arrangements and means.
FIG. 1 is a view for describing overall description of a camera actuator according to one embodiment of the present invention.
FIG. 2 is a view for describing an arrangement of components of the camera actuator according to one embodiment of the present invention.
FIG. 3 is a view for describing overall components of the camera actuator according to one embodiment of the present invention.
FIG. 4 is a view for describing differences between lengths of the components of the camera actuator according to one embodiment of the present invention.
FIG. 5 is a view for describing a second lens assembly of the camera actuator according to one embodiment of the present invention.
FIG. 6 is a view for describing a third lens assembly of the camera actuator according to one embodiment of the present invention.
FIG. 7 is a view for describing a first rail and a first ball of the camera actuator according to one embodiment of the present invention.
FIG. 8 is a view for describing the first rail of the camera actuator in more detail according to one embodiment of the present invention.
FIG. 9 is a view for describing a second rail and a second ball of the camera actuator according to one embodiment of the present invention.
FIG. 10 is a view for describing the second rail of the camera actuator in more detail according to one embodiment of the present invention.
FIG. 11 is a view for describing a first substrate, a second substrate, and a third substrate of the camera actuator according to one embodiment of the present invention.
FIG. 12 is a view for describing a first Hall sensor of the camera actuator according to one embodiment of the present invention.
FIG. 13 is a view for describing a second Hall sensor of the camera actuator according to one embodiment of the present invention.
FIG. 14 is a view for describing a difference between a center between a first magnet and a second magnet and a center between a first coil and a second coil of the camera actuator according to one embodiment of the present invention.
FIG. 15 is a view for describing a cover base of the camera actuator according to one embodiment of the present invention.
FIG. 16 is a view for describing a first surface of the camera actuator according to one embodiment of the present invention.
FIG. 17 is a view for describing a separation space between a protrusion and a housing of the camera actuator according to one embodiment of the present invention.
FIG. 18 is a view for describing a separation shape of the protrusion and a separation shape of an extension of the camera actuator according to one embodiment of the present invention.
FIG. 19 is a view for describing a first stopper and a second stopper of the camera actuator according to one embodiment of the present invention.
FIG. 20 is a view for describing a third surface of the camera actuator according to one embodiment of the present invention.
FIG. 21 is a view for describing a step portion of the camera actuator according to one embodiment of the present invention.

### [Modes of the Invention]

Since the present invention may be variously modified and have several embodiments, specific embodiments will be illustrated in the accompanying drawings and described in detail. However, this is not intended to limit the present invention to the specific embodiments, and it should be appreciated that all changes, equivalents, and substitutes falling within the spirit and technical scope of the present invention are encompassed in the present invention. In the description of the embodiments, certain detailed descriptions of the related art will be omitted when it is deemed that they may unnecessarily obscure the gist of the inventive concept.

Terms such as "first" and "second" may be used to describe various components, but the components are not limited by the above terms. These terms are used only to distinguish one component from another.

Terms used herein are only for the purpose of describing particular embodiments and are not intended to limit the present invention. Singular forms are intended to include the plural forms, unless the context clearly indicates otherwise. In the present specification, it should be understood that the terms "comprise," "comprising," "include," and/or "including" used herein specify the presence of stated features, numbers, steps, operations, elements, components, and/or combinations thereof but do not preclude the presence or addition of one or more other features, numbers, steps, operations, elements, components, and/or combinations thereof.

In addition, throughout the specification, when components are "connected," this may not only mean that two or more components are directly connected, but this may also mean that two or more components are indirectly connected through other components or are physically connected and also electrically connected or are one thing even referred to as different names according to positions or functions thereof.

In addition, when a first component is described as being formed or disposed "on" or "under" a second component, such a description includes both a case in which the two components are formed or disposed in direct contact with each other and a case in which one or more other components are interposed between the two components. In addition, when the first component is described as being formed "on or under" the second component, such a description may include a case in which the first component is formed at an upper side or a lower side with respect to the second component.

Hereinafter, exemplary embodiments of the present invention that may specifically realize the objects of the present invention will be described with reference to the accompanying drawings.

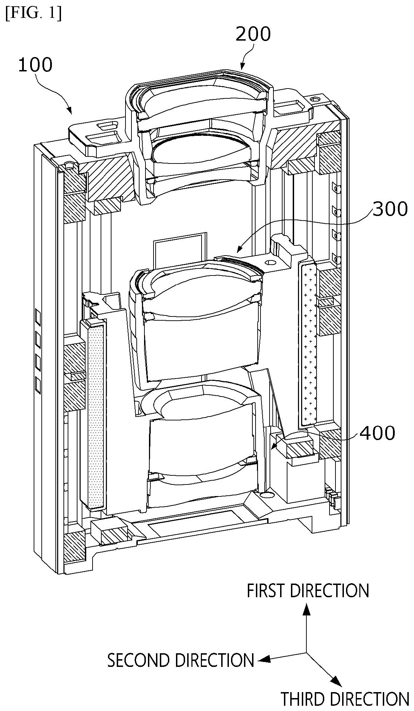

First, overall description of the present invention will be made with reference to FIGS. 1 to 11.

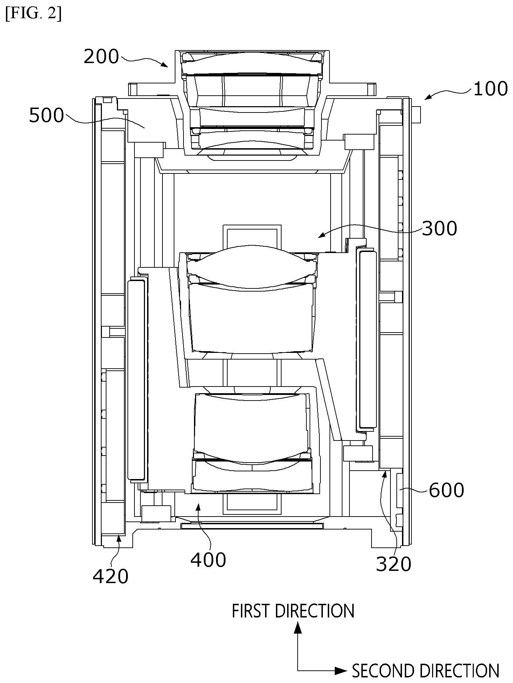

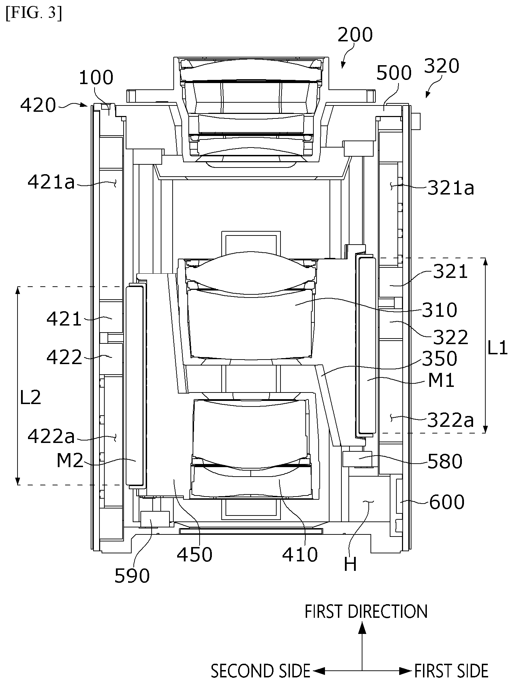

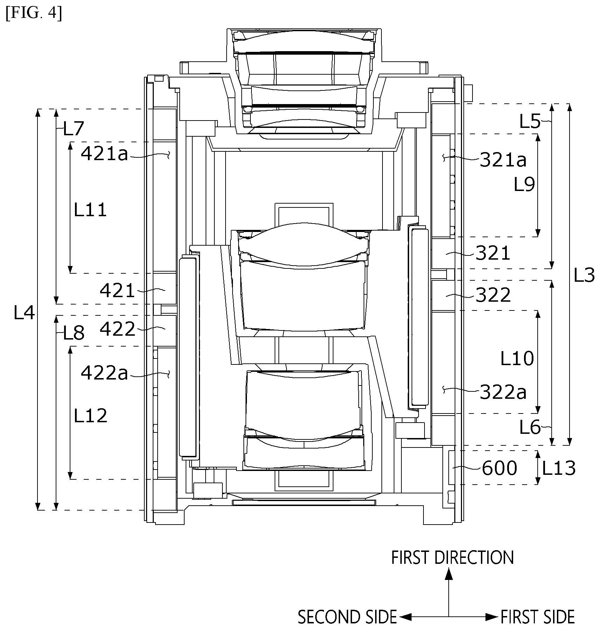

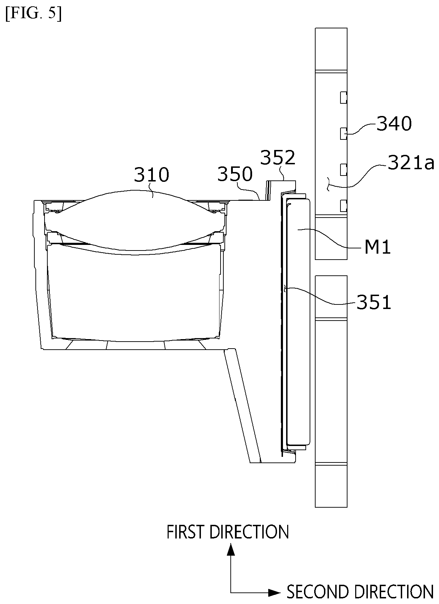

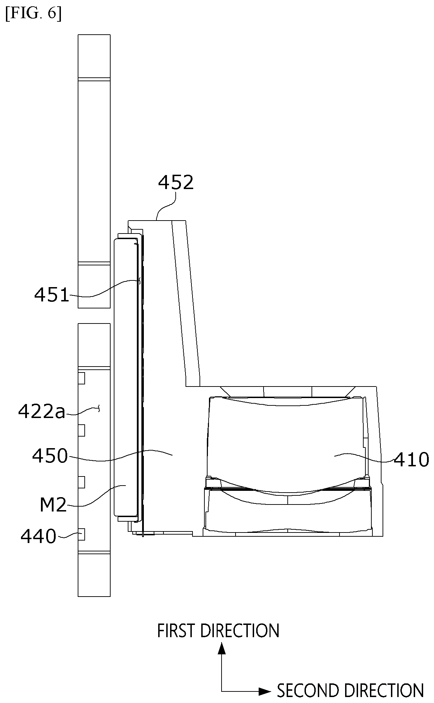

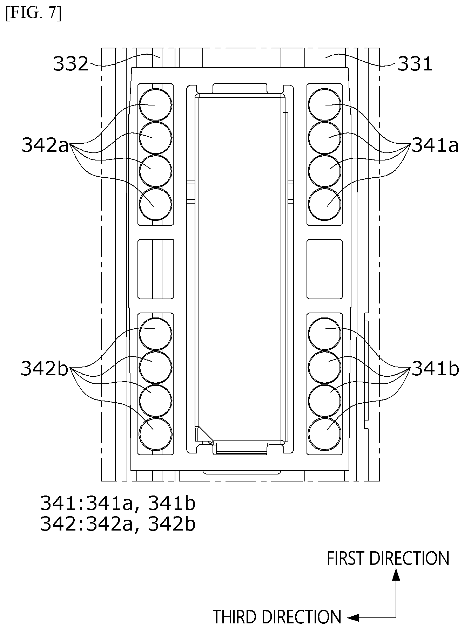

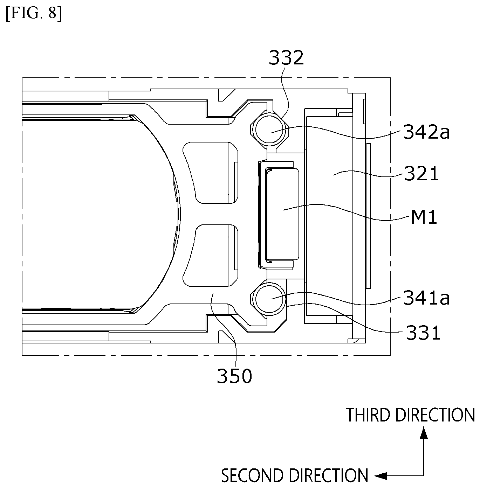

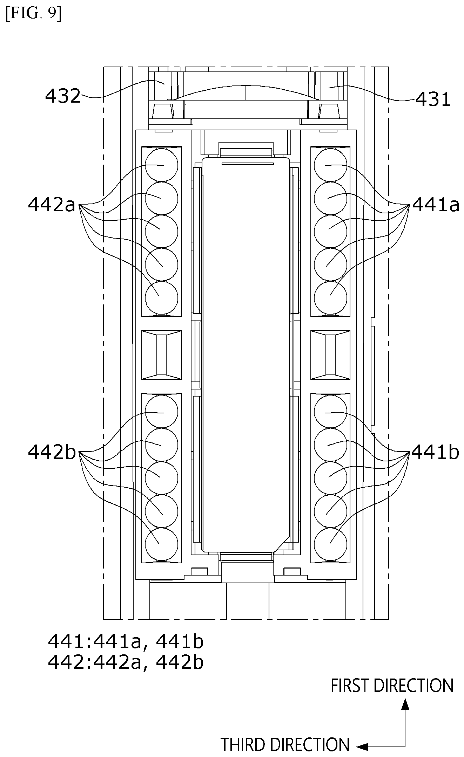

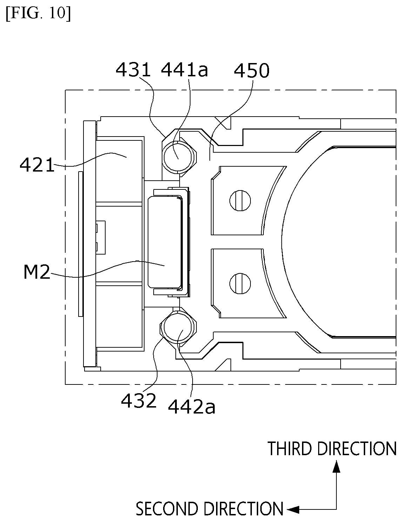

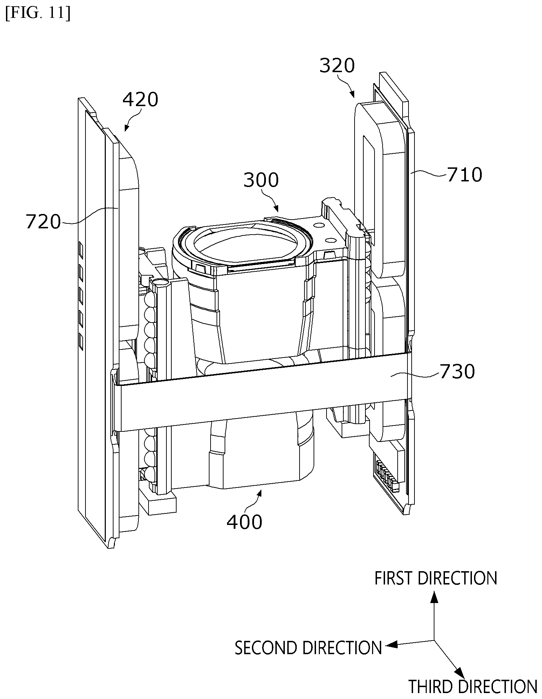

Specifically, FIG. 1 is a view for describing overall description of a camera actuator according to one embodiment of the present invention, and FIG. 2 is a view for describing an arrangement of components of the camera actuator according to one embodiment of the present invention. FIG. 3 is a view for describing overall components of the camera actuator according to one embodiment of the present invention, and FIG. 4 is a view for describing differences between lengths of the components of the camera actuator according to one embodiment of the present invention. FIG. 5 is a view for describing a second lens assembly of the camera actuator according to one embodiment of the present invention, and FIG. 6 is a view for describing a third lens assembly of the camera actuator according to one embodiment of the present invention. FIG. 7 is a view for describing a first rail and a first ball of the camera actuator according to one embodiment of the present invention, and FIG. 8 is a view for describing the first rail of the camera actuator in more detail according to one embodiment of the present invention. FIG. 9 is a view for describing a second rail and a second ball of the camera actuator according to one embodiment of the present invention, and FIG. 10 is a view for describing the second rail of the camera actuator in more detail according to one embodiment of the present invention. FIG. 11 is a view for describing a first substrate, a second substrate, and a third substrate of the camera actuator according to one embodiment of the present invention.

First, as illustrated in FIG. 1, the camera actuator according to one embodiment of the present invention includes a housing 100, a second lens assembly 300 and a third lens assembly 400 which are disposed inside the housing 100 and move in a first direction of an optical axis direction, and a first lens assembly 200 disposed on the housing 100 in the optical axis direction, that is, disposed relatively adjacent to an object in a direction from the object toward the second lens assembly 300.

In this case, the housing 100 may form an exterior of the camera actuator, and the first lens assembly 200, the second lens assembly 300, and the third lens assembly 400 may be sequentially disposed in the first direction.

In addition, based on FIG. 1, the first lens assembly 200 may be disposed on the upper portion of the housing 100, and the second lens assembly 300 and the third lens assembly 400 may be disposed inside the housing 100.

Referring to FIG. 2 for more detailed description, as illustrated in FIG. 2, the first lens assembly 200, the second lens assembly 300, and the third lens assembly 400 may be sequentially disposed in the first direction.

A cover base 500 may be disposed between the first lens assembly 200 and the second lens assembly 300.

In this case, the first lens assembly 200 may be seated in the cover base 500, a separate adhesive member may be disposed, and the adhesive member may be an epoxy.

In this case, it is only to help understanding by mentioning the epoxy as an example of the adhesive member, but the present invention is not limited thereto, and the cover base 500 will be described in more detail with reference the accompanying drawings.

Meanwhile, based on the first direction parallel to the optical axis direction, a first driver 320 and a second driver 420 may be disposed in a direction perpendicular to the first direction.

In this case, the first driver 320 and the second driver 420 are disposed with the second lens assembly 300 and the third lens assembly 400 interposed therebetween in a second direction, and the first driver 320 and the second driver 420 will be described in detail with reference to the accompanying drawings.

Meanwhile, as illustrated in FIG. 3, the second lens assembly 300 may include a second lens group 310 and a first body 350 which surrounds the second lens group 310 and extends toward a first side, and the third lens assembly 400 may include a third lens group 410 and a second body 450 which surrounds the third lens group 410 and extends toward a second side.

In this case, the first side and the second side may be one side surface and the other side surface based on the housing 100 in the second direction perpendicular to the first direction parallel to the optical axis direction, the second direction may be a direction toward both side surfaces of the housing 100, the first direction may be a height direction of the housing 100, and a third direction perpendicular to the second direction and the first direction may be a direction toward a front surface and a rear surface of the housing 100.

That is, the first direction may be parallel to the optical axis direction or may be the optical axis direction, and the second direction may include two directions from the first side toward the second side and from the second side toward the first side based on the housing 100, and the third direction may refer to two directions from the front surface toward the rear surface and from the rear surface toward the rear surface based on the housing 100.

This will be more clearly understood through not only the first direction, the second direction, and the third direction, but also the first side and the second side which are illustrated in the drawings.

In this case, the first body 350 and the second body 450 will be described in more detail with reference to the accompanying drawings.

Meanwhile, the camera actuator according to the embodiment of the present invention further includes the first driver 320 which is disposed at the first side of the housing 100 and drives the second lens assembly 300, the second driver 420 which is disposed at the second side of the housing 100 and drives the third lens assembly 400, and a controller 600 which controls the first driver 320 and the second driver 420 in addition to the first lens assembly 200, the housing 100, the second lens assembly 300, and the third lens assembly 400.

In this case, the first driver 320 may be disposed at the first side and may include a first magnet M1 and first coils 321 and 322 to drive the second lens assembly 300 through an electromagnetic interaction at the first side.

That is, when electricity flows in the first coils 321 and 322, an electromagnetic interaction occurs with the first magnet M1 so that the second lens assembly 300 may move in the first direction.

In addition, the second driver 420 may be disposed at the second side and may include a second magnet M2 and the second coils 421 and 422 to drive the third lens assembly 400 through an electromagnetic interaction at the second side.

That is, when electricity flows in the second coils 421 and 422, an electromagnetic interaction occurs with the second magnet M2 so that the third lens assembly 400 may move in the first direction.

In this case, the first magnet M1 may be disposed between the first coils 321 and 322 and the first body 350, and the second magnet M2 may be disposed between the second coils 421 and 422 and the second body 450.

In this case, as illustrated in FIGS. 3 and 4, a length L3 of the first coils 321 and 322 in the first direction may be greater than a length L1 of first magnet M1 in the first direction and may be smaller than a length L4 of the second coils 421 and 422 in the first direction.

That is, based on the first direction, the length L3 of the first coils 321 and 322 may be smaller than the length L4 of the second coils 421 and 422, the length L1 of the first magnet M1 may be smaller than a length L2 of the second magnet M2, the length L3 of the first coils 321 and 322 may be greater than the length L1 of the first magnet M1, and the length L4 of the second coils 421 and 422 may be greater than the length L2 of the second magnet M2.

In this case, the reason why the first coils 321 and 322 are formed to be shorter than the second coils 421 and 422 in the first direction may be because a driving distance of the third lens assembly 400 is relatively smaller than a driving distance of the second lens assembly 300.

In this case, the first coils 321 and 322 disposed at the first side may be divided into a first coil unit 321 and a second coil unit 322, and the first coil unit 321 and the second coil unit 322 may be disposed apart from each other in the first direction.

In addition, the second coils 421 and 422 disposed at the second side may be divided into a third coil unit 421 and a fourth coil unit 422, and the third coil unit 421 and the fourth coil unit 422 may be disposed apart from each other in the first direction.

In this case, a length L5 of the first coil unit 321 in the first direction may be smaller than a length L7 of the third coil unit 421 in the first direction and a length L8 of the third coil unit 421 in the first direction.

Similarly, a length L6 of the second coil unit 322 in the first direction may be smaller than the length L7 of the third coil unit 421 in the first direction and the length L8 of the third coil unit 422 in the first direction.

In this case, the first coil unit 321 may have a first hollow 321a defined by an inner diameter thereof, the second coil unit 322 may have a second hollow 322a defined by an inner diameter thereof, a third coil unit 421 may have a third hollow 421a defined by an inner diameter thereof, and the fourth coil may have a fourth hollow 422a defined by an inner diameter thereof.

In this case, similar to the relationships between the first coils 321 and 322 and second coils 421 and 422, a length L9 of the first hollow 321a may be relatively smaller than a length L11 of the third hollow 421a and a length L12 of the fourth hollow 422a in the first direction.

In addition, based on the first direction, a length L10 of the second hollow 322a may be relatively smaller than the length L11 of the third hollow 421a and the length L12 of the fourth hollow 422a in the first direction.

In this case, similar to the relationships between the first coils 321 and 322 and second coils 421 and 422, the first hollow 321a may be formed to be relatively shorter than the third hollow 421a and the fourth hollow 422a in the first direction.

In addition, the second hollow 322a may be formed to be relatively shorter than the third hollow 421a and the fourth hollow 422a in the first direction.

In this case, in the first direction, although an uppermost end of the first hollow 321a may be located colinearly with an uppermost end of the third hollow 421a, a lowermost end of the first hollow 321a may be disposed above a lowermost end of the third hollow 421a in the first direction.

Meanwhile, the controller 600 may be disposed to overlap the first coils 321 and 322 in the first direction and overlap the second coils 421 and 422 in the second direction from the first side toward the second side.

More specifically, the controller 600 may overlap the first coil unit 321 and the second coil unit 322 in the first direction and overlap the fourth hollow 422a in the second direction.

In other words, although the controller 600 overlaps the first coil unit 321 and the second coil unit 322 in the first direction, the controller 600 may not overlap the first coil unit 321 and the second coil unit 322 in the second direction, the controller 600 may not be disposed in the first hollow 321a, the second hollow 322a, the third hollow 421a, and the fourth hollow 422a and may be disposed outside the first coil unit 321 and the second coil unit 322.

That is, the controller 600 may be disposed inside the housing 100 to be distinguished from the first coils 321 and 322, and a space in which the controller 600 is located may include an opening H which opens in a direction from the first side toward the second side in the second direction.

In addition, the opening H may also be formed as a plurality of openings H in the third direction perpendicular to the first direction and the second direction.

In this case, the sum of the length L3 of the first coils 321 and 322 in the first direction and a length L13 of the controller 600 in the first direction may be smaller than the length L4 of the second coils 421 and 422 in the first direction.

More specifically, the controller 600 may be disposed to be distinguished from the first coil unit 321 and the second coil unit 322 in the first direction and disposed at a relatively long distance from the first lens assembly 200.

Accordingly, unlike the conventional case in which the controller 600 is disposed in the first hollow 321a or the second hollow 322a, as the controller 600 is disposed to be separated from the first coil unit 321 and the second coil unit 322, effects of electromagnetic fields generated by the first coil unit 321 and the second coil unit 322 and a magnetic field generated by the first magnet M1 can be minimized.

Accordingly, a heating amount applied to the controller 600 can be decreased effectively.

In addition, a first stopper 580 facing the second lens assembly 300 in the first direction may be further disposed inside the housing 100 to prevent the second lens assembly 300 from colliding with the housing 100 and the first lens assembly 200 or the third lens assembly 400 while the second lens assembly 300 moves.

In addition, the housing 100 may further include a second stopper 590 facing the third lens assembly 400 in the first direction to prevent the third lens assembly 400 from colliding with the housing 100 and the second lens assembly 300 while the third lens assembly 400 moves.

In this case, the first stopper 580 is disposed to face the second lens assembly 300 in the first direction and may be disposed to face the first body 350 and disposed above the opening H.

That is, since the first stopper 580 is disposed above the opening H in the first direction, a level of an upper surface of the first stopper 580 in the first direction may be different from a level of an upper surface of the second stopper 590 in the first direction.

Meanwhile, referring to FIG. 5 for more detailed description of the second lens assembly 300, as illustrated in FIG. 5, the second lens assembly 300 may include the second lens group 310 and the first body 350 as described above, and the second lens assembly 300 may be driven by the first driver 320.

In this case, the second lens assembly 300 may include the second lens group 310 and the first body 350 as described above, and in the second lens assembly 300, the first magnet M1 may be disposed between the first body 350 and the first coils 321 and 322.

In this case, the first body 350 may include a first grip portion formed in a shape surrounding the second lens group 310.

In this case, the first grip portion and the first body 350 may be a barrel of the second lens assembly 300.

In addition, the first body 350 may extend to increase a width thereof from the second lens group 310, that is, the first grip portion, toward the first coils 321 and 322 and may extend downward from the second lens group 310 to be relatively inclined toward the first coils 321 and 322.

In addition, a first recessed space 351 which is recessed from the first side toward the second side such that the first magnet M1 is disposed therein may be disposed in the first body 350.

In this case, a first step 352 may be formed above the first body 350 and the first magnet M1 to prevent the second lens group 310 from colliding with the first lens assembly 200 while the second lens group 310 moves in the first direction.

In this case, the first step 352 may protrude relatively further upward than the second lens group 310 in the first direction to prevent damage to the second lens group 310 due to collision between the first lens assembly 200 and the second lens group 310.

In addition, a first Hall sensor 340 may be disposed in the first hollow 321a of the first coil unit 321, and the second lens assembly 300 may overlap the first Hall sensor 340 in the second direction while the second lens assembly 300 moves in the first direction.

Meanwhile, as illustrated in FIG. 6, the third lens assembly 400 may include the third lens group 410 and the second body 450 which surrounds the third lens group 410 and extends toward the second driver 420.

In addition, similar to the first body 350, the second body 450 may include a second grip portion which surrounds the third lens group 410, the second body 450 may extend from the second grip portion toward the second driver 420, and an upper side of the second body 450 may extend to be relatively long and to be inclined in the first direction.

In this case, similar to the first grip portion and the first body 350 described above, the second grip portion and the second body 450 may be a barrel of the third lens assembly 400.

In addition, a second recessed space 451 which is recessed in the first side may be formed in the second body 450, and the second magnet M2 may be located in the second recessed space 451.

As a result, the second magnet M2 may be located between the second coils 421 and 422 and the second body 450 in the second direction.

In this case, a second step 452 may be formed above the second body 450 and the second magnet M2 to prevent the third lens group 410 from colliding with the second lens assembly 300 while the third lens group 410 moves in the first direction.

In this case, a bottom surface of the second body 450 in a direction opposite to the second step 452 may come into contact with the second stopper 590 to be prevented from colliding with a bottom surface of the housing 100, and the second step 452 may come into contact with a fourth stopper 570 facing the second stopper 590 in the first direction to be prevented from colliding with the second lens assembly 300.

In this case, the fourth stopper 570 will be described with reference to the accompanying drawings in more detail.

In addition, a second Hall sensor 440 may be disposed in the fourth hollow 422a of the fourth coil unit 422, and as the third lens assembly 400 moves in the first direction, the third lens assembly 400 may overlap the second Hall sensor 440 in the second direction.

Meanwhile, the first driver 320 may include first rails 331 and 332, and this will be described with reference to FIG. 7.

First, as illustrated in FIG. 7, the first driver 320 may include the first rails 331 and 332 and first balls 341 and 342 disposed between the first body 350 and the first rails 331 and 332.

More specifically, the first rails 331 and 332 may include a first rail unit 331 and a second rail unit 332, and the first rail unit 331 and the second rail unit 332 may be spaced apart from each other in the third direction.

In addition, the first balls 341 and 342 may include a first ball unit 341 and a second ball unit 342, and in the second direction, the first rail unit 331 and the first ball unit 341 may overlap, and the second rail unit 332 and the second ball unit 342 may overlap.

In this case, the first magnet M1 may be disposed between the first ball unit 341 and the second ball unit 342 in the third direction, and the first ball unit 341 and the second ball unit 342 may minimize friction while the second lens assembly 300 moves.

In addition, the first ball unit 341 and the second ball unit 342 allow the first coils 321 and 322 to be spaced a predetermined distance from the first magnet M1 so as to prevent friction and contact occurring when the first coils 321 and 322 and the first magnet M1 come into contact with each other.

In this case, the first ball unit 341 may include a first ball member 341a and a second ball member 341b spaced apart from each other in the first direction, the first ball member 341a may be disposed as a plurality of first ball members 341a in the first direction, and the second ball member 341b may be disposed as a plurality of second ball members 341b in the first direction.

In addition, similar to the first ball unit 341, the second ball unit 342 may include a third ball member 342a and a fourth ball member 342b spaced apart from each other in the first direction, and the third ball member 342a and the fourth ball member 342b may be disposed as a plurality of third ball members 342a and as a plurality of fourth ball members 342b in the first direction.

More specifically, as illustrated in FIG. 8, when viewed from above, the first magnet M1 may be disposed between the first coils 321 and 322 and the first body 350 and between the first ball unit 341 and the second ball unit 342.

In addition, the first rail unit 331 may be in point contact with the first ball unit 341 at one point, and the second ball unit 342 may be in point contact with the second rail unit 332 at two or more points or may be in surface contact with the second rail unit 332.

Meanwhile, as illustrated in FIG. 9, similar to the first driver 320, the second driver 420 may include second rails 431 and 432 and second balls 441 and 442, and the second rails 431 and 432 may include a third rail unit 431 and a fourth rail unit 432.

In addition, the third rail unit 431 and the fourth rail unit 432 may be spaced apart from each other in the third direction, and the second magnet M2 may be disposed between the third rail unit 431 and the fourth rail unit 432.

In addition, the second balls 441 and 442 may include a third ball unit 441 disposed to correspond to the third rail unit 431 and a fourth ball unit 442 disposed to correspond to the fourth rail unit 432.

In this case, the third ball unit 441 may include a plurality of fifth ball members 441a disposed relatively adjacent to the first lens assembly 200 in the first direction and a plurality of sixth ball members 441b spaced apart from the fifth ball members 441a.

That is, similar to the first magnet M1, in the third direction, the second magnet M2 may be disposed between the third rail unit 431 and the fourth rail unit 432, and the second magnet M2 may be disposed between the third ball unit 441 and the fourth ball unit 442.

In addition, the fourth ball unit 442 may include a plurality of seventh ball members 442a disposed relatively adjacent to the first lens assembly 200 in the first direction and a plurality of eighth ball members 442b spaced apart from the seventh ball members 442a in the first direction.

In this case, the first ball unit 341 may be a group of the plurality of first ball members 341a and the plurality of second ball members 341b, and the second ball unit 342 may be a group of the plurality of third ball members 342a and the plurality of fourth ball members 342b.

In addition, the third ball unit 441 may be a group of the plurality of fifth ball members 441a and the plurality of sixth ball members 441b, and the fourth ball unit 442 may be a group of the plurality of seventh ball members 442a and the plurality of eighth ball members 442b.

This is to individually name them to help understanding when forms distinguished in the first direction are described, and this may be a common name of a group of each of a plurality of first ball units 341, a plurality of second ball units 342, a plurality of third ball units 441, and a plurality of fourth ball units 442.

In addition, in an example of the first ball unit 341, when the number of the first ball units 341 or the plurality of first ball units 341 is mentioned, it may be understood as the total number of the first ball members 341a and the second ball members 341b.

Meanwhile, the third ball unit 441 and the fourth ball unit 442 may be disposed to be relatively longer than the first ball unit 341 and the second ball unit 342, respectively, in the first direction.

Specifically, a number of each of the first ball units 341 and the second ball units 342 may be disposed relatively fewer than a number of each of the third ball units 441 and the fourth ball units 442.

In addition, since the first ball unit 341 and the second ball unit 342 are disposed between the first body 350 and the first rails 331 and 332, and the third ball unit 441 and the fourth ball unit 442 are disposed between the second body 450 and the second rails 431 and 432, the second body 450 may be relatively longer than the first body 350 in the first direction.

In addition, as illustrated in FIG. 10, the third ball unit 441 may be in point contact with the third rail unit 431, and the fourth ball unit 442 may be in point contact with the fourth rail unit 432 at two or more points or in surface contact with the fourth rail unit 432.

Meanwhile, as illustrated in FIG. 11, the embodiment of the present invention may include a first substrate 710, a second substrate 720, and a third substrate 730.

In this case, the first driver 320, specifically, the first coils 321 and 322, which drive the second lens assembly 300, and the controller 600 may be disposed on the first substrate 710.

In addition, the second driver 420, specifically, the second coils 421 and 422, which drive the third lens assembly 400, may be disposed on the second substrate 720, and the first substrate 710 and the second substrate 720 may be connected through the third substrate 730.

In this case, each of the first substrate 710 and the second substrate 720 may be formed in a shape inserted into the housing 100, and slits into which the first substrate 710 and the second substrate 720 are inserted may be formed in the housing 100.

In this case, the first substrate 710 and the second substrate 720 may be disposed inside the housing 100 through the slits.

In addition, the third substrate 730 may surround an outer side of the housing 100 in the second direction and extend from the first substrate 710 toward the second substrate 720 to connect the first substrate 710 and the second substrate 720, and a signal of the controller 600 may be transmitted to the second coils 421 and 422 through the third substrate 730.

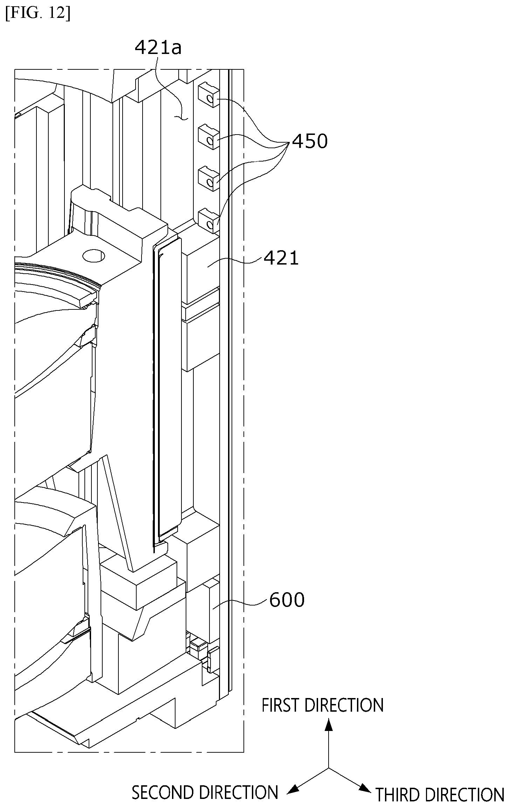

Meanwhile, an arrangement relationship of the above-described camera actuator according to the embodiment of the present invention will be described with reference to FIGS. 12 to 14.

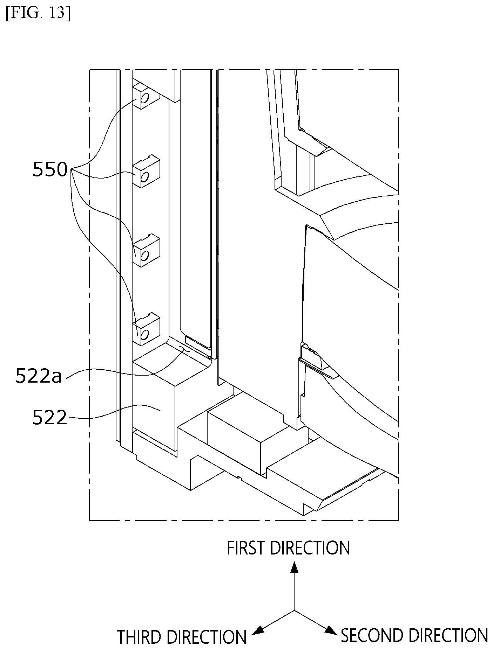

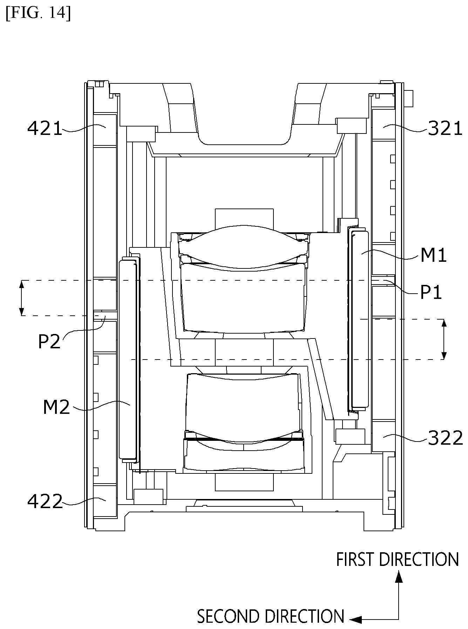

Specifically, FIG. 12 is a view for describing the first Hall sensor of the camera actuator according to one embodiment of the present invention, FIG. 13 is a view for describing the second Hall sensor of the camera actuator according to one embodiment of the present invention, and FIG. 14 is a view for describing a difference between a center between a first magnet and a second magnet and a center between a first coil and a second coil of the camera actuator according to one embodiment of the present invention.

First, as illustrated in FIG. 12, the first coils 321 and 322 may include the first coil unit 321 and the second coil unit 322, and the controller 600 may be disposed on the first substrate 710 to be separated from the first coils 321 and 322.

In this case, the first hollow 321a defined by the inner diameter may be formed in the first coil unit 321, the second hollow 322a defined by the inner diameter may be formed in the second coil unit 322, and the first Hall sensor 340 may be disposed in the first hollow 321a.

This may be because the second lens assembly 300 moves between the first lens assembly 200 and the third lens assembly 400 as described above.

In addition, in the first coils 321 and 322, since the controller 600 is disposed under the first coils 321 and 322 in the first direction, more specifically, at a location at which the controller 600 overlaps the fourth hollow 422a in the second direction, a surface of an uppermost end of the first coils 321 and 322 in the first direction may be colinear with a surface of an uppermost end of the second coils 421 and 422 in the first direction.

Meanwhile, as illustrated in FIG. 13, the second Hall sensor 440 may be disposed in the fourth hollow 422a of the fourth coil unit 422, and this may be because the third lens assembly 400 may be located relatively under the second lens assembly 300 in the first direction.

That is, as illustrated in FIG. 14, the first Hall sensor 340 and the second Hall sensor 440 may be disposed not to overlap each other in the second direction.

Meanwhile, when a central point of a spaced region between the first coil unit 321 and the second coil unit 322 is defined as a first central point P1, and a central point of a spaced region between the third coil unit 421 and the fourth coil unit 422 is defined as a second central point P2, as illustrated in FIG. 13, the first central point P1 and the second central point P2 may be disposed to be misaligned in the first direction.

This may be because the length L3 of the first coils 321 and 322 in the first direction is relatively smaller than the length L4 of the second coils 421 and 422 in the first direction, and uppermost end surfaces of the first coils 321 and 322 and the second coils 421 and 422 in the first direction are colinearly disposed in the second direction.

In addition, since the first magnet M1 and the second magnet M2 may have different lengths because the second lens assembly 300 and the third lens assembly 400 have the different driving distances, and accordingly, a central point of the first magnet M1 and a central point of the second magnet M2 may be disposed to be misaligned in the first direction.

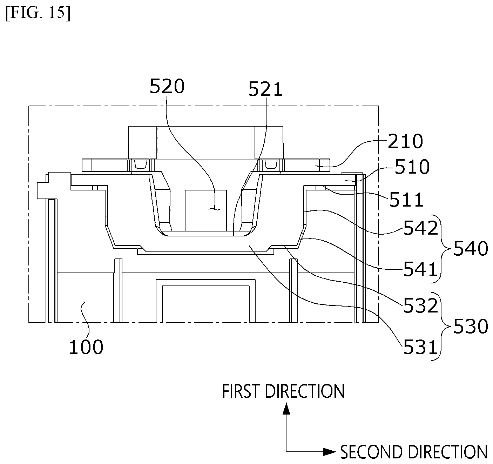

Meanwhile, the housing 100 and the cover base 500 of the camera actuator according to the embodiment of the present invention will be described with reference to FIGS. 15 to 19.

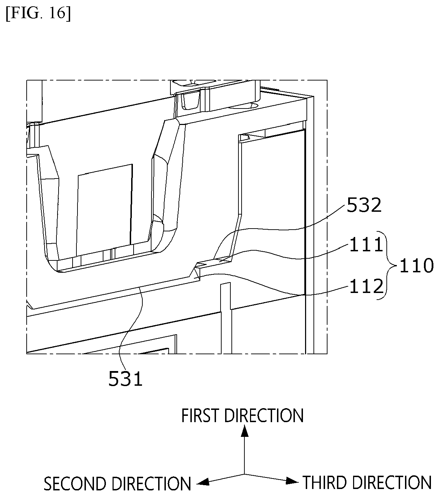

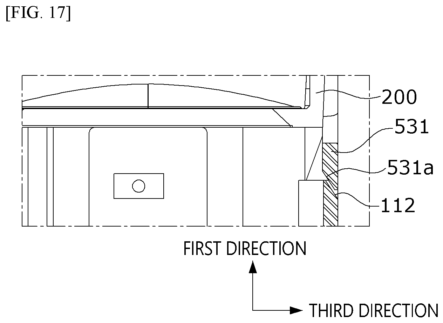

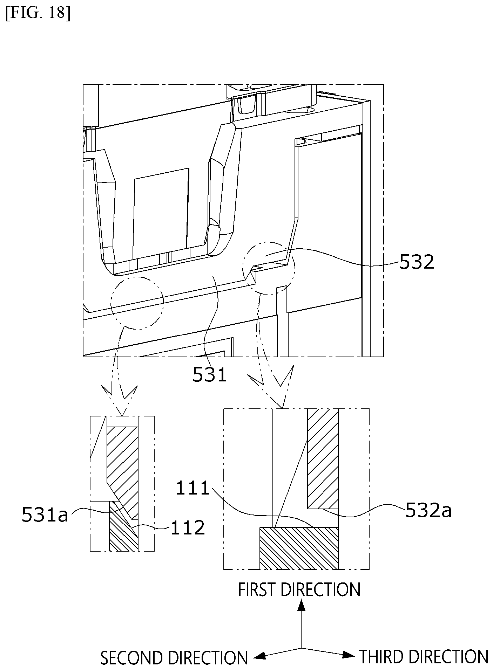

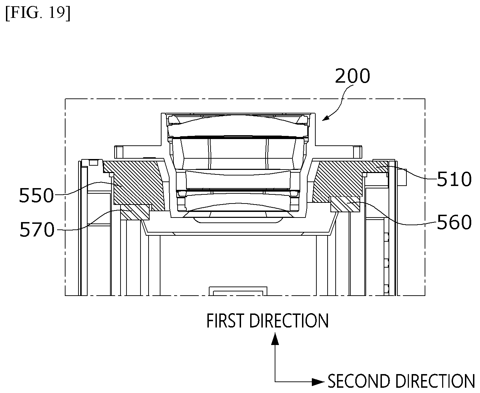

Specifically, FIG. 15 is a view for describing the cover base of the camera actuator according to one embodiment of the present invention, and FIG. 16 is a view for describing a first surface of the camera actuator according to one embodiment of the present invention. FIG. 17 is a view for describing a separation space between a protrusion and the housing of the camera actuator according to one embodiment of the present invention, and FIG. 18 is a view for describing a separation shape of the protrusion and a separation shape of an extension of the camera actuator according to one embodiment of the present invention. FIG. 19 is a view for describing a first stopper and a second stopper of the camera actuator according to one embodiment of the present invention.

First, as described above, the second lens assembly 300 and the third lens assembly 400 may be located in the housing 100 and moved in the optical axis direction by the first driver 320 and the second driver 420, and the first lens assembly 200 may be fixed to the outer side of the housing 100.

In addition, as the cover base 500 is located between the first lens assembly 200 and the second lens assembly 300, more specifically, between the first lens assembly 200 and the housing 100, the first lens assembly 200 may be seated on the cover base 500.

In this case, the cover base 500 may be seated on the housing 100.

That is, the first lens assembly 200, the cover base 500, the second lens assembly 300, and the third lens assembly 400 may be sequentially disposed in the optical axis direction, and the first lens assembly 200 and the cover base 500 may be disposed outside the housing 100.

In addition, the second lens assembly 300 and the third lens assembly 400 may be disposed inside the housing 100.

More specifically, as illustrated in FIG. 15, based on the housing 100, the first lens assembly 200 disposed outside the housing 100 at a location adjacent to an object side in the optical axis direction may include a first lens group 220 and a second wing 210 extending from the first lens group 220 in the second direction.

Meanwhile, as illustrated in FIG. 15, the cover base 500 may be provided between the first lens assembly 200 and the housing 100, and the cover base 500 may prevent a problem that the second lens assembly 300 which moves in the first direction collides with the first lens assembly 200 to cause damage to the first lens group 220 or the second lens group 310.

More specifically, the cover base 500 may include a first wing 510 extending in the second direction and a recess 520 in which the first lens assembly 200 is seated.

In this case, the first wing 510 may be formed longer than the second wing 210 in the second direction, and the first wing 510 and the second wing 210 may be spaced a predetermined distance in the first direction.

In this case, as an inner surface of the recess 520 is in contact with the first lens assembly 200, and an adhesive member may be disposed between the recess 520 and the first lens assembly 200, and the first lens assembly 200 may be fixed by the adhesive member.

In this case, the adhesive member disposed between the first lens assembly 200 and the recess 520 may be an epoxy but is not limited thereto.

In addition, when a bottom surface of the recess 520 is defined as a bottom recessed surface 521, the bottom recessed surface 521 and a bottom surface of the first lens assembly 200 may be spaced a predetermined distance in the first direction.

Meanwhile, the cover base 500 may include a first surface 530 facing the second lens assembly 300 and a second surface 540 which extends away from the first surface 530 in the first direction with the first surface 530 interposed therebetween in the second direction.

More specifically, the first surface 530 may face the housing 100, may be disposed in a direction toward the second lens assembly 300, and may be spaced a predetermined distance from the housing 100, and accordingly, an impact applied to the cover base 500 can be minimized.

In this case, the first surface 530 may include a protrusion 531 protruding in the first direction from the first lens assembly 200 in a direction facing the second lens assembly 300 and an extension 532 extending from both ends of the protrusion 531 in the second direction.

In this case, based on the extension 532, the protrusion 531 may extend to decrease a width thereof in a direction from the first lens assembly 200 toward the second lens assembly 300extension.

In this case, the second surface 540 may include an inclined portion 541 extending to be inclined from the extension 532 in a direction away from the second lens assembly 300 in the first direction and a side surface portion 542 extending from the inclined portion 541 in a direction away from the second assembly in the optical axis direction.

That is, the inclined portion 541 may be formed between the side surface portion 542 and the extension 532 and may extend to be inclined from the extension 532 toward the extension 532, and the side surface portion 542 may extend from the inclined portion 541 toward the second wing 210 to be parallel to the first direction.

Meanwhile, a portion of a lower portion of the first wing 510 may be spaced apart from the housing 100, and this will be described in detail with reference to the accompanying drawings.

In addition, as illustrated in FIG. 16, each of the first surface 530 and the second surface 540 may be spaced a predetermined distance from the housing 100, and this may prevent an impact due to movement of the second lens assembly 300 from being transmitted to the first lens assembly 200 as described above.

Meanwhile, the form in which the protrusion 531 and the extension 532 of the first surface 530 are spaced apart from the housing 100 will be described. First, as illustrated in FIGS. 17 and 18, a bottom surface of the protrusion 531 facing the housing 100 and spaced apart from the housing 100 may be defined as a bottom protruding surface 531a, a bottom surface of the extension 532 facing the housing 100 and spaced apart from the housing 100 may be defined as a bottom extension surface 532a, a surface of the housing 100 facing the bottom extension surface 532a may be defined as a flat surface 111, and a surface of the housing 100 facing the bottom protruding surface 531a may be defined as an inclined surface 112.

First, as illustrated in FIG. 17, naming of the inclined surface 112 of the housing 100 facing the bottom protruding surface 531a of the protrusion 531 may be because the bottom protruding surface 531a and the inclined surface 112 may be inclined to correspond to each other with respect to the first direction.

In addition, the bottom protruding surface 531a and the inclined surface 112 may be inclined to correspond to each other with respect to the first direction, and the bottom protruding surface 531a may be disposed to face the inclined surface 112 to be located relatively outside the housing 100.

This can prevent a problem that the second lens assembly 300, which moves in a direction toward the first lens assembly 200, comes into contact with the protrusion 531 when the bottom protruding surface 531a relatively moves toward the inside of the housing 100.

Further, when the housing 100 is deformed due to heat or other factors, and the inclined surface 112 moves away outward from the housing 100, the deformation can be restricted because the bottom protruding surface 531a and the inclined surface 112 are in contact with each other.

In addition, as illustrated in FIG. 17, there is a difference between shapes of the bottom protruding surface 531a and the bottom extension surface 532a of the protrusion 531 and the extension 532, respectively, and this will be described in detail. The bottom extension surface 532a and the flat surface 111 of the housing 100 facing the bottom extension surface 532a may be parallel to each other in the second direction, and the bottom protruding surface 531a and the inclined surface 112 of the housing 100 facing the bottom protruding surface 531a may be disposed parallel to each other in a state of being inclined with respect to the first direction.

Due to such a form, the protrusion 531 and the extension 532 may be disposed with a step inclined with respect to each other, and the inclined surface 112 and the flat surface 111 may also be disposed with a step inclined with respect to each other.

Meanwhile, as illustrated in FIG. 19, the lower portion of the first wing 510 may include a third stopper 560 facing the second lens assembly 300 in the first direction and the fourth stopper 570 facing the third lens assembly 400 in the first direction.

In this case, a step portion 550 may be formed between the third stopper 560 and the first wing 510 and between the fourth stopper 570 and the first wing 510.

In this case, the second lens assembly 300 may come into contact with the third stopper 560 while ascending, and the third lens assembly 400 may come into contact with the fourth stopper 570 while ascending.

In addition, since the third stopper 560 and the fourth stopper 570 are components disposed on the cover base 500, an impact amount applied to the first lens assembly 200 may be buffered by the cover base 500 and transmitted to the first lens assembly 200.

As described above, in the cover base 500, since the conventional third stopper 560 and the fourth stopper 570 are formed on the second wing 210 to buffer the impact amount directly applied to the first lens assembly 200, the safety of first lens assembly 200 can be more effectively secured.

In addition, a length of the third stopper 560 and the step portion 550 at the first side in the first direction may be different from a length of the fourth stopper 570 and the step portion 550 at the second side in the first direction, and this may be due to a difference between driving distances of the second lens assembly 300 and the third lens assembly 400.

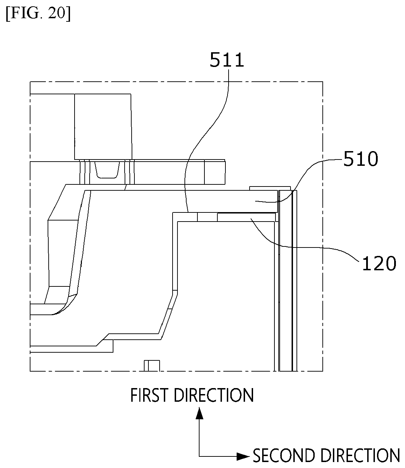

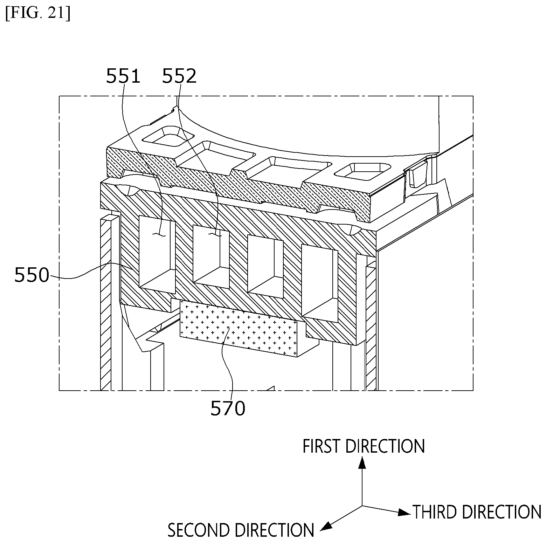

The buffering of the cover base 500 of the embodiment of the present invention will be described with reference to FIGS. 20 and 21.

Specifically, FIG. 20 is a view for describing a third surface of the camera actuator according to one embodiment of the present invention, and FIG. 21 is a view for describing the step portion of the camera actuator according to one embodiment of the present invention.

First, as illustrated in FIG. 20, although the first surface 530 and the second surface 540 are disposed apart from the housing 100, when a bottom surface of the first wing 510 is defined as a bottom wing surface 511, only a portion of the bottom wing surface 511 may be spaced apart from the housing 100.

This may be because a space in which the first surface 530 and the second surface 540 are spaced apart from the housing 100 is required. To this end, a protrusion 120 protruding from the housing 100 toward the bottom wing surface 511 may be included such that only a portion of the bottom wing surface 511 is in contact with the housing 100 and only a portion is spaced apart from the bottom wing surface 511.

Meanwhile, an arrangement of the cover base 500 will be described in detail. As illustrated in FIG. 21, as described above, the inner surface of the recess 520 may be in contact with the first lens assembly 200, and the first surface 530 and the second surface 540 may be disposed as a pair in the third direction with the first lens assembly 200 interposed therebetween.

In this case, the step portion 550 may be disposed between the pair of second surfaces 540 in the third direction.

In addition, since the cover base 500 of the present invention is directed to reducing an impact amount by transmitting an impact of the second lens assembly 300 or the third lens assembly 400 to the first lens assembly 200, buffer spaces may be disposed between the first wing 510 and the third stopper 560 and between the first wing 510 and the fourth stopper 570 in the optical axis direction.

In this case, the buffer spaces may be divided into a first buffer space 551 which does not overlap the third stopper 560 or the fourth stopper 570 in the first direction and a second buffer space 552 which overlaps the third stopper 560 or the fourth stopper 570 in the first direction.

In this case, when an impact is directly transmitted to the third stopper 560 or the fourth stopper 570, the second buffer space 552 may allow the impact to be transmitted to the first lens assembly 200 and effectively reduce the impact and vibrations, and the detailed description thereof will be omitted because it is clear that an impact and vibrations are reduced in a hollow structure.

Meanwhile, the first buffer space 551 may be disposed as a pair of first buffer spaces 551 with the first buffer space 551 interposed there between in the third direction, and when an impact is transmitted to the second buffer space 552, the impact and vibrations which are not sufficiently reduced in the second buffer space 552 may be further reduced.

The above description of the housing 100 and the cover base 500 will be summarized. The cover base 500 may be provided between the housing 100 and the first lens assembly 200, each of the first surface 530 and the second surface 540 of the cover base 500 may be disposed to be spaced the predetermined distance from the housing 100 in the first direction to restrict an impact occurring in the housing 100.

In addition, since the third stopper 560 and the fourth stopper 570 are disposed on the cover base 500, an impact may be prevented from being directly transmitted to the first lens assembly 200.

In addition, the step portion 550 may be disposed between the third stopper 560 and fourth stopper 570 and the first wing 510, and the second buffer space 552 overlapping the third stopper 560 or the fourth stopper 570 in the first direction and the pair of first buffer spaces 551 with the second buffer space 552 interposed therebetween in the third direction may be disposed inside the step portion 550.

In this case, the second buffer space 552 can reduce an impact and vibrations directly transmitted to the third stopper 560 or the fourth stopper 570, and the first buffer spaces 551 can further reduce the impact and the vibrations which are not sufficiently reduced in the second buffer space 552 and minimize an impact amount transmitted to the first lens assembly 200.

Exemplary embodiments of the present invention have been described, and it may be clear to those skilled in the art that the present invention may be realized in other specific forms without departing from its purpose and scope in addition to the above-described embodiments.

Therefore, the above-described embodiments should be regarded as illustrative and not restrictive, and accordingly, the present invention is not limited to the above description and may be modified within the scope of the appended claims and their equivalents.

## Claims

1. A camera actuator comprising:
a housing;
a first lens assembly and a second lens assembly which are disposed inside the housing and move in a first direction parallel to an optical axis direction;
a first driver which is disposed at a first side of the housing and drives the first lens assembly; and
a second driver which is disposed at a second side of the housing and drives the second lens assembly,
wherein the first driver includes a first magnet disposed on the first lens assembly and a first coil facing the first magnet,
the second driver includes a second magnet disposed on the second lens assembly and a second coil facing the second magnet,
a length of the first coil in the first direction is greater than a length of the first magnet in the first direction and smaller than a length of the second coil in the first direction.

2. The camera actuator of claim 1, comprising a controller disposed apart from the first coil in the first direction,
wherein the controller overlaps the first coil in the first direction and overlaps the second coil in a second direction from the first side toward the second side.

3. The camera actuator of claim 1, wherein:
the second magnet is longer than the first magnet in the first direction; and
a center of the first coil and a center of the second coil are disposed to be misaligned.

4. The camera actuator of claim 3, wherein the first coil and the second coil are disposed to be longer than the second magnet in the first direction.

5. The camera actuator of claim 1, wherein:
the first lens assembly includes a first lens group and a first extension which surrounds the first lens group and extends toward the first driver; and
the second lens assembly includes a second lens group and a second extension which surrounds the second lens group and extends toward the second driver.

6. The camera actuator of claim 5, wherein:
the first extension includes a first recessed space recessed in the second side;
the first magnet is disposed in the first recessed space;
the second extension includes a second recessed space recessed in the first side; and
the second magnet is disposed in the second recessed space.

7. The camera actuator of claim 6, wherein:
the first driver further includes a first rail disposed between the first extension and the first coil and first ball units disposed between the first rail and the first extension;
the second driver further includes a second rail disposed between the second extension and the second coil and second ball units disposed between the second rail and the second extension; and
the number of the second ball units is greater than the number of the first ball units.

8. The camera actuator of claim 1, wherein the second lens assembly is disposed to be longer than the first lens assembly in the first direction and has a driving distance which is longer than that of the first lens assembly in the first direction.

9. The camera actuator of claim 1, wherein:
the first coil includes a first coil unit and a second coil unit which are disposed apart from each other in the first direction; and
the second coil includes a third coil unit and a fourth coil unit which are disposed apart from each other in the first direction.

10. The camera actuator of claim 9, wherein a first central point of a spaced region between the first coil unit and the second coil unit and a second central point of a spaced region between the third coil unit and the fourth coil unit are disposed to be misaligned in the first direction.
